# EUROPEAN PATENT APPLICATION

(11) **EP 2 292 713 A1**
(43) Date of publication of application: **09.03.2011**
(21) Application number: 09762249.2
(22) Date of filing: 08.06.2009
(51) Int. Cl.: C09J 201/00, C09J 7/02, C09J 11/06, C09J 163/00, C09J 177/00

(54) **FLAME-RETARDANT ADHESIVE COMPOSITION AND LAMINATED FILM**

(30) Priority: 11.06.2008 JP 2008152443; 12.06.2008 JP 2008154581
(71) Applicant: Mitsubishi Plastics, Inc., Tokyo 103-0021 (JP)
(72) Inventor: TANAKA, Kazuya, Nagahama-shi Shiga 526-8660 (JP); TANITA, Masahide, Nagahama-shi Shiga 526-8660 (JP); KITAYAMA, Kazuhiko, Nagahama-shi Shiga 526-8660 (JP); SAITOU, Taishi, Nagahama-shi Shiga 526-8660 (JP)
(74) Representative: Gille Hrabal Struck Neidlein Prop Roos
(86) International application number: PCT/JP2009/002575
(87) International publication number: WO 2009/150818

(57) **Abstract**

As a novel laminated film which uses no halogen series compound and is capable of conferring in a flame-retardant adhesive composition comprising a phosphorus series compound mixed therein an even better flame-retardancy, a laminated film is proposed, provided with a resin layer on at least one face of a flame-retardant adhesive composition layer comprising a flame-retardant adhesive composition containing a thermoset-type adhesive resin composition (A), a phosphorus series compound (B) with a melting temperature of 170°C or higher and a foaming agent (C) in an unfoamed state.

## Description

### [Technical field]

The present invention relates to an adhesive composition provided with a high degree of flame-retardancy, and in particular, to a flame-retardant adhesive composition which uses no halogen series flame-retardant to realize a high degree of flame-retardancy, as well as a laminated film using the same.

### [Technical background]

In prior art, in order to render an adhesive composition flame-retardant, mixing of halogen series compounds, and in particular bromine series compounds, has been performed. However, it has been pointed out that halogen series compounds are a factor in the generation during burning of harmful gases such as dioxins, and not only there are problems in the safety during incineration treatment or thermal recycling of waste, there is also the possibility that the human body is affected by the generation of harmful gases when a fire occurs. Therefore, as substitution products for halogen series compounds, the use of inorganic series flame-retardants such as phosphorus series compounds, metal hydroxides and nitrogen series compounds is being examined.

For instance, in Patent Reference 1, a flame-retardant resin composition containing an epoxy resin, a hardener and phosphine oxide as essential components is described, in Patent Reference 2, a flame-retardant epoxy resin composition containing an epoxy resin, a hardener and a phosphinic acid salt or a diphosphinic acid salt as a flame-retardant is described, and in Patent Reference 3, as a resin composition having excellent flame-retardancy, heat resistance and metal foil peel-strength, a resin composition with an average particle size of 2 to 5 µm and a specific surface area of 2.0 to 4.0m²/g containing a phosphinic acid salt, a thermosetting resin and a hardener of the thermosetting resin is described.

[Patent Reference 1] Japanese Patent Application Laid-open No. 2001-200140, Claim 1
[Patent Reference 2] Japanese Patent Application Laid-open No. 2002-284963, Claim 1
[Patent Reference 3] Japanese Patent Application Laid-open No. 2006-143844, Abstract and Claim 1

### [Disclosure of the invention]

### [Issues to be addressed by the invention]

Although phosphorus series compounds do not generate toxic gases during burning as halogen series compound do, they are no match for halogen series compounds in terms of flame-retardancy conferring effect. Therefore, they bear the issue that, while sufficient flame-retardancy can be conferred when the layer thickness of an adhesive composition layer is large, in particular when the layer thickness is 1 mm or greater, sufficient flame-retardancy cannot be conferred when the layer thickness is small, in particular when the layer thickness is less than 1 mm. In addition, they bear the issue that, even if an adhesive composition layer containing a phosphorus series compound is intercalated between films comprising a non-flame-retardant resin such as polyethylene terephthalate, sufficient flame-retardancy cannot be conferred to the laminate.

Thus, the present invention provides a novel flame-retardant adhesive composition allowing a flame-retardant adhesive composition, which uses no halogen series compound and comprises a phosphorus series compound mixed-in, to be conferred a superior flame-retardancy compared to this prior art type of flame-retardant adhesive composition.

### [Means to address the issues]

The present invention proposes a flame-retardant adhesive composition comprising a thermoset-type adhesive resin composition (A), a phosphorus series compound (B) with a melting temperature of 170°C or higher and a foaming agent (C) in an unfoamed state.

Since the flame-retardant adhesive composition of the present invention does not contain a halogen series compound, it has excellent safety with no environmental contamination or toxic gas generation during burning. Moreover, when heated to a high temperature, the foaming agent (C) foams while the carbonization reaction of the phosphorus series compound (B) proceeds forming a heat insulation layer, which allows especially excellent flame-retardancy to be conferred.
Thus, even if the thickness of an adhesive composition layer comprising it is small, the flame-retardant adhesive composition of the present invention allows sufficient flame-retardancy to be conferred, and in addition, by layering, on at least one face of a layer comprising a non-flame-retardant resin such as polyethylene terephthalate, an adhesive composition layer comprising the flame-retardant adhesive composition of the present invention to form a laminated film, sufficient flame-retardancy can be conferred to the laminated film.

### [Brief description of the drawings]

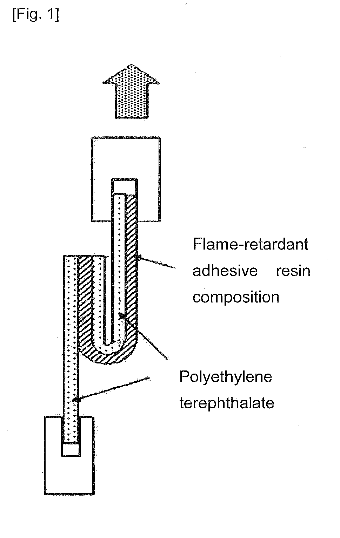

[Fig. 1] Cross-sectional view to explain the method for measuring peel strength.

### [Embodiments for carrying out the invention]

Hereinafter, a flame-retardant adhesive composition will be described as one example of embodiments of the present invention (hereinafter referred to as "the present flame-retardant adhesive composition). However, the scope of the present invention is not to be limited to the present flame-retardant adhesive composition described in the following.

### <The present flame-retardant adhesive composition>

The present flame-retardant adhesive composition is a flame-retardant adhesive composition comprising a thermoset-type adhesive resin composition (A), a phosphorus series compound (B) and a foaming agent (C) in an unfoamed state.

### <Thermoset-type adhesive resin composition (A)>

It suffices that the thermoset-type adhesive resin composition (A) is an adhesive resin composition having a thermosetting resin as a major component, and as such thermosetting resin, for instance, epoxy resin, phenol resin, unsaturated polyester resin, polyurethane resin, silicone, polyimide resin, fluorine resin, urea resin, melamine resin, resorcinol resin, and the like, can be cited. Among them, epoxy series adhesive compositions having epoxy resin and hardener as major components are preferred from the balance of adhesive property, heat resistance and costs.

As epoxy series adhesive compositions, combinations of general epoxy resin and hardener can be used.

As concrete examples of epoxy resin, for instance bisphenol A-type epoxy resin, bisphenol F-type phenoxy resin, bisphenol S-type epoxy resin, phenol novolac-type epoxy resin, cresol novolac-type epoxy resin, naphthalene-type epoxy resin, biphenyl-type epoxy resin, glycidyl ester-type epoxy resin, and the like, can be cited, in addition, modified versions of these epoxy resins, e.g., chelate-modified epoxy resin, urethane-modified epoxy resin, rubber-modified epoxy resin, and the like, can be cited, and among these, one species or a mixed resin comprising a combination of two or more species can be used. Among these, urethane-modified epoxy resin are particularly preferred.
As commercially available epoxy resins, "827, 828, 828EL, 834" manufactured by Japan Epoxy Resins Co., Ltd., "ADEKA RESIN" series manufactured by ADEKA Corporation, "ThreeBond 2000" series manufactured by ThreeBond Co., Ltd., and the like, can be cited.

As concrete examples of epoxy resin hardeners, for instance, aliphatic amines such as diethylenetriamine, triethylene tetramine, dipropylene diamine, diethylaminopropyl amine, N-aminoethyl piperazine and menthane diamine, aromatic amines such as metaphenylene diamine, diaminodiphenyl methane and diaminodiphenyl sulfone, or modified amines thereof, imidazole series compounds such as 2-methyl imidazole, 2-ethyl-4-methyl imidazole, 1-cyanoethyl-2-undecyl imidazolium trimellitate and epoxy-imidazole adducts, or, acid anhydrides such as phthalic anhydride, maleic anhydride, succinic anhydride, anhydrous trimellitic acid, anhydrous benzophenone tetracarboxylic acid, ethyleneglycol bis-trimellitate, glycerol tris-trimellitate, tetrahydrophthalic anhydride, methyl tetrahydrophthalic anhydride, endomethylene tetrahydrophthalic anhydride, methylbutenyl tetrahydrophthalic anhydride, dodecenyl succinic anhydride, hexahydrophthalic anhydride and methyl hexahydrophthalic anhydride, or, polyamide resin, polysulfide resin, liquid polymercaptan, and the like, can be cited, and among these, one species or a mixed resin comprising a combination of two or more species can be used.
As commercially available epoxy resin hardeners, "ST" series manufactured by Japan Epoxy Resins Co., Ltd., "HN-2200, HN-2000, HN-5500" manufactured by Hitachi Chemical Co., Ltd., "ThreeBond 2105C" manufactured by ThreeBond Co., Ltd., "Versamid " series manufactured by Cognis Japan Ltd., and the like can be cited.

Among these, using a polyamide amine as hardener is particularly desirable from the point of adhesive property.
Regarding polyamide amines used as hardener, those with an amine number of 50 to 350 are desirable, particularly, those with 80 to 300 are more desirable, of which using polyamide amine with an amine number of 100 to 225 is desirable.
Using a polyamide amine with an amine number of 100 to 225 as a hardener for the epoxy resin renders the viscosity of flame-retardant adhesive composition suitable and increases fluidity, such that, not only the film can be prepared efficiently, since the conforming ability of the obtained film is increased, layering without generating wrinkles is possible. From such points of view, it is desirable that the amine number of the polyamide amine is 130 to 180 and more preferably 150 to 200.

For the polyamide amine, one species of polyamide amine may be used, and, in addition, a mixture of two or more species of polyamide amine may be used.
When using a mixture of two or more species of polyamide amine, it is desirable to adjust the amine number as a mixture, that is to say, the total value of "amine number x mixing ratio" of each polyamide amine to the range described above.

When using a mixture of two or more species of polyamide amine, from points of view of hardenability, secondary processability and adhesive property, it is particularly desirable to use a mixture of a polyamide amine (β-1) with an amine number of 50 to 95 and a polyamide amine (β-2) with an amine number of 230 to 360.
Since excellent hardenability and secondary processability (folding, punching) can be conferred with polyamide amine (β-1) on one hand and excellent adhesive property and flexibility can be conferred with polyamide amine (β-2) on the other, hardenability, secondary processability, adhesive property and flexibility can be increased in a well balanced manner.
From such points of view, it is more desirable that the amine number of polyamide amine (β-1) is 70 to 93, and particularly 80 to 90 is all the more desirable. Meanwhile, it is more desirable that the amine number of polyamide amine (β-2) is 230 to 320, and particularly 230 to 280 is all the more desirable.

When using a mixture of a polyamide amine (β-1) with an amine number of 50 to 95 and a polyamide amine (β-2) with an amine number of 230 to 360, regarding the proportions of polyamide amine (β-1) and polyamide amine (β-2), it is desirable that the proportion occupied in the entirety of polyamide amine (b) by polyamide amine (β-1) is 10 to 90% in mass, in particular 20 to 80% in mass, of which in particular 30 to 70% in mass is more desirable.

Note that general methods can be used as methods for preparing polyamide amine. For instance, it can be obtained by condensation polymerization of dimer acid, fatty acid and polyamine, in which case the amine number can be adjusted by adjusting the polymerization rate.
As commercially available polyamide amines, "Versamid" series manufactured by Cognis Japan Ltd., "POLYMIDE" series manufactured by Sanyo Chemical Industries, Ltd., "LUCKAMIDE" series manufactured by DIC Corporation, and the like, can be used, and polyamide amines with respectively different amine number grades can be available.

Note that, in order to disperse phosphorus series compound (B) and foaming agent (C) satisfactorily, it is desirable that both the epoxy resin and the hardener are used in liquid forms. With a solvent series adhesive composition, it is difficult to increase in a necessary and sufficient manner the thickness of the adhesive composition layer comprising the present flame-retardant adhesive composition.
Elsewhere, mixing additives generally mixed into an adhesive resin composition is optional.

The mixing ratio of epoxy resin and hardener is not limited in particular restriction. As a rough indication, it is desirable to mix so as to have a content in hardener of 30 to 90% in mass with respect to the total amount of epoxy resin and hardener. Mixing the epoxy resin and the hardener in this range allows excellent adhesive property and processability to be maintained. Within the above range, it is more desirable from such point of view that the content in hardener with respect to the total amount of epoxy resin and hardener is 40% in mass or greater or 80% in mass or less, of which in particular 50% in mass or greater or 70% in mass or less is even more desirable.
Note that, in addition to the epoxy resin and the hardener, mixing additives generally mixed into an adhesive resin composition is optional.

### <Phosphorus series compound (B)>

It is desirable that the phosphorus series compound (B) is a compound containing phosphorus and is a compound which melting temperature is 170°C or higher. However, phosphorus series compounds which melting temperature is 170°C or higher include phosphorus series compounds that are in solid state at higher temperatures (for instance, near 250°C).
Since the present flame-retardant adhesive composition is heated to on the order of 120 to 150°C in the preparation process that includes a raw materials mixing step, if the melting temperature is lower than 170°C, not only flame-retardancy deteriorates, but there is also the possibility of melting and phase separation of the phosphorus series compound from the thermoset-type adhesive resin composition (A). Thus, it is desirable that the melting temperature of the phosphorus series compound (B) is 170°C or higher.
In addition, since the present flame-retardant adhesive composition is assumed to be processed while being heated to 190°C or higher, or aged to 190°C or higher during forming, by using a phosphorus series compound (B) which melting temperature is 190°C or higher, it is possible to suppress even during such forming, phase separation from the thermoset-type adhesive resin composition (A) or bleeding out of the phosphorus series compound to the surface of a molded article. Thus, it is more desirable to use a phosphorus series compound which melting temperature is 190°C or higher as the phosphorus series compound (B). However, phosphorus series compounds which melting temperature is 190°C or higher include phosphorus series compounds that are in solid state at higher temperatures (for instance, near 250°C).

As phosphorus series compounds which melting temperature is 190°C or higher, for instance, dialkyl phosphinic acids such as dimethyl phosphinic acid, ethylmethyl phosphinic acid, diethyl phosphinic acid, methyl-n-propyl phosphinic acid, methane di(methyl phosphinic acid), benzene-1,4-(dimethyl phosphinic acid), methylphenyl phosphinic acid and diphenyl phosphinic acid, or, phosphinic acid salts obtained by reacting an alkaline metal salt of dialkyl acid with a metal compound such as magnesium, calcium, aluminum, tin, lead, germanium, titanium, zinc, iron, cesium, strontium, manganese, lithium, sodium and potassium, condensed phosphoric ester amide and ammonium polyphosphate, and the like can be cited. One species among these, or a mixed resin comprising a combination of two or more species, can be used.

Among these, from the point of view of how well the carbonization reaction of phosphorus series compounds proceeds, it is desirable to use phosphinic acid salts, and among these, metal salts of phosphinic acid, for instance aluminum diethyl phosphinate. If a phosphinic acid salt is mixed as the phosphorus series compound (B), flame-retardancy can be obtained even at low concentration compared to other phosphorus series compounds, therefore, for instance, when a film is prepared from the present flame-retardant adhesive composition, as there is no thickening, the film preparation is straightforward and film strength can be maintained. In addition, dripping can be also suppressed during burning.
As commercially available phosphinic acid salts, for instance, EXOLIT OP 1230, 930, 935 manufactured by Clariant Japan, as condensed phosphoric ester amide, SP703H manufactured by Shikoku Chemicals Corporation, and as ammonium polyphosphate, ZURAN 484 manufactured by CHITEC Corporation, can be cited.

It is desirable that the specific surface area of the phosphorus series compound used as the phosphorus series compound (B) is 5m²/g or greater, in particular 7m²/g or greater, and more preferably 10m²/g or greater. On the other hand, 20m²/g or less, in particular 17m²/g or less is desirable, and more preferably 15m²/g or less.
If the specific surface area of the phosphorus series compound (B) is 5m²/g or greater, sufficient flame-retardancy can be conferred, and if 20m²/g or less, problems such as faulty dispersion and forming defects, which accompany an increase in viscosity, do not occur.

The mixing amount of the phosphorus series compound (B) is not limited in particular. For instance, with respect to the mass of the entirety of the present flame-retardant adhesive composition, a content of 10 to 70% in mass is desirable, of which 30% in mass or greater or 60% in mass or less is more desirable, of which 40% in mass or greater or 55% in mass or less is even more desirable.
If the phosphorus series compound (B), in particular a phosphinic acid salt, is mixed at such ranges, it is desirable since there is not too little phosphorus series compound (B) causing no flame-retardancy to be obtained, and on the other hand, there is not too much phosphorus series compound (B) causing mechanical properties, for instance, film strength or the like, to decrease and viscosity to increase excessively during forming.

### <Foaming agent (C)>

It is important that the foaming agent (C) is contained in the present flame-retardant adhesive composition in an unfoamed state. If the present flame-retardant adhesive composition contains a foaming agent in an unfoamed state, when the present flame-retardant adhesive composition is heated and burned, the foaming agent rapidly decomposes and foams, allowing flame-retardancy to be increased by an endothermic action during decomposing and a combustible gas dilution effect by an inert gas such as nitrogen or carbon dioxide. Moreover, since a heat insulation layer is formed by foaming, exceptionally excellent flame-retardancy can be realized.

Whether or not the foaming agent (C) is in an unfoamed state can be determined clearly by observing the cross-section of a layer or a formed article (including films and membranes) formed from the present flame-retardant adhesive composition with an electron microscope to observe the state of the foaming agent, the state of the voids centered on the foaming agent, and the like.
When assessing quantitatively, for instance, a thin section with a thickness of 700Å can be collected from a formed article (including films and membranes) formed from the present flame-retardant adhesive composition, observed at 2,000 X with a scanning electron microscope, how many voids of 1 µm or smaller are present within a size of 30 µm x 30 µm in actual dimensions be measured, and those with a number of voids of 5 or less be determined to be in "unfoamed statue".

Regarding foaming agents, although exothermic foaming agents and endothermic foaming agents exist, it is desirable to use an endothermic foaming agent in the present flame-retardant adhesive composition. When an exothermic foaming agent is used, burning proceeds at an accelerated pace from heating due to foaming, therefore, from point of view of flame-retardancy, using an endothermic foaming agent is preferred. However, it is also possible to mix both an exothermic foaming agent and an endothermic foaming agent for use.

An endothermic foaming agent is a foaming agent for which, during foaming, there is an accompanying endothermic reaction.
As such endothermic foaming agents, for instance, inorganic series foaming agents having inorganic compounds such as sodium bicarbonate and magnesium carbonate as major component, or, organic series foaming agents having azodicarbonamide as major component can be cited.

In addition, it is desirable to use as foaming agent (C) a foaming agent with a decomposition temperature of 190°C or higher. Since the present flame-retardant adhesive composition is assumed to be processed while being heated to 190°C or higher, or aged to 190°C or higher during forming, it is desirable that the decomposition temperature of the foaming agent (C) is 190°C or higher so that the foaming agent does not foam during forming.
Ideally, it is desirable that the carbonization reaction of the phosphorus series compound (B) is promoted by the heat generated when the foaming agent (C) foams. It follows that, if the decomposition temperature of the foaming agent is excessively high, the phosphorus series compound (B) carbonizes before the foaming agent (C) foams, and thus, it is desirable that the decomposition temperature of the foaming agent (C) is 350°C or lower.
Taking all such points together, it is desirable the decomposition temperature of the foaming agent (C) is 190 to 350°C, of which 195°C or higher or 300°C or lower is more desirable, of which in particular 200°C or higher or 250°C or lower is more desirable.
Note that, for the decomposition temperature of the foaming agent (C), by heating 10 mg of foaming agent at a rate of temperature rise of 5°C/minute under nitrogen atmosphere, the temperature when the weight decreases by 1% can be measured as the decomposition temperature using, for instance, Thermo Plus TG8120 manufactured by RIGAKU Corporation.

As concrete examples of such foaming agent (C), for instance, inorganic series foaming agents having sodium bicarbonate or magnesium carbonate as major component, or, organic series foaming agent having azodicarbonamide, N,N'-dinitrosopentamethylene tetramine, 4,4'-oxy bis(benzenesulfonyl hydrazide) or the like as major component can be cited and while one species of these can be used alone, they can be also mixed and used.
Among them, it is desirable to use either of sodium bicarbonate and azodicarbonamide, or, a mixture thereof.

As commercially available foaming agents, "CELLMIC " series (organic series foaming agents, inorganic series foaming agents) manufactured by Sankyo Kasei Co., Ltd., "CELLBORN" series (inorganic series foaming agents), "NEOCELLBORN" series (organic series foaming agents), "EXCELLAR" series (organic series foaming agents), "SPANGCELL" series (organic series foaming agents), "VINYFOR AC" series (organic series foaming agents) and " CELLULAR" series (organic series foaming agents) manufactured by Eiwa Chemical Ind. Co., Ltd., and the like can be cited.

The mixing amount of foaming agent (C) is not limited in particular. For instance, with respect to the mass of the entirety of the present flame-retardant adhesive composition, it is desirable to mix at a proportion of 0.1 to 10% in mass, from which mixing at proportion of 1% mass or greater or 8% in mass or less is even more desirable, of which in particular a proportion of 3% in mass or greater or 5% in mass or less.
By mixing the foaming agent (C) in such ranges, excellent adhesive property and flame-retardancy can be conferred without decreasing mechanical properties (for instance, the strength of the film).

Note that, ultraviolet light absorbers, plasticizers, fillers, colorants such as pigments and dyes, oxidation inhibitors, heat stabilizers, and the like, may be mixed into the flame-retardant adhesive composition of the present invention, or/and, the resin composition forming a layer provided along the flame-retardant adhesive composition, in a range that does not impair the effects of the present invention.

### <Preparation method>

The present flame-retardant adhesive composition can be prepared by melt-mixing a thermoset-type adhesive resin composition (A), a phosphorus series compound (B), a foaming agent (C) and other additives. In so doing, it is desirable to select suitably according to the type and reactivity of the resin, and carry out mixing while heating, as necessary.
However, it is necessary that the heating temperature is a lower temperature than at least the decomposition temperature of the foaming agent (C), of which a lower temperature than the melting temperature of the phosphorus series compound (B) is more desirable, and in particular 130°C or lower is all the more desirable. In addition, it is desirable to carry out mixing of the source materials under nitrogen atmosphere, as necessary.

The form of the present flame-retardant adhesive composition may be of a form of an adhesive from melt-mixed raw materials, as necessary crosslinked or hardened; in addition, it may also be of a form processed into membrane-shape, film-shape, sheet-shape, panel-shape, or other shapes. In so doing, the respective forming methods may suitably adopt well known methods.

After forming into a film or the like, curing (aging) by heat-treating at 30 to 100°C for 1 to 24 hours is desirable. In the case of an epoxy series adhesive resin, the epoxy resin and a hardener can be reacted and hardened by such curing (aging).
It is necessary that the curing (aging) temperature is a lower temperature than at least the decomposition temperature of the foaming agent (C), of which a lower temperature than the melting temperature of phosphorus series compound (B) is desirable, and in particular 130°C or lower is more desirable. In addition, it is desirable to be carried out under nitrogen atmosphere, as necessary.

Since the present flame-retardant adhesive composition, even with a thickness of less than 1 mm, can realize excellent flame-retardancy and excellent adhesive property, it can be used for instance to bond various resin materials requiring flame-retardancy. In addition, it is also possible to form a flame-retardant resin laminate, as follows.

### <Flame-retardant resin laminate>

Since the present flame-retardant adhesive composition forms a heat insulation layer with the foaming agent (C) foaming along with the carbonization reaction of the phosphorus series compound (B) during burning, excellent flame-retardancy can be conferred to a non-flame-retardant resin layer, which was difficult to render flame-retardant in prior art, by layering a layer comprising the present flame-retardant adhesive composition.

A flame-retardant resin laminate, for instance a laminated film, can be formed by forming a resin layer containing a thermosetting resin or a thermoplastic resin (referred to as "non-flame-retardant resin layer"), for instance, on one face, that is to say, on either face or on both faces, of a flame-retardant adhesive composition layer comprising the present flame-retardant adhesive composition.
In so doing, the non-flame-retardant resin layer can be formed from a non-flame-retardant resin, which, for instance similarly to olefin series resins, polyethylene terephthalate and styrene series resins, is not recognized as being a flame-retardant resin.

Note that for the laminated film, the total thickness thereof is 500 µm or less, of which 400 µm or less is desirable, from which 300 µm or less is desirable. In addition, a proportion occupied in the total thickness of the laminated film by the thickness of the flame-retardant adhesive composition layer of 20 to 70%, of which 30% or greater or 70% or less, from which in particular 40% or greater or 70% or less, is desirable. By adopting such ranges, flame-retardancy can be conferred without compromising the mechanical characteristics, heat resistance and the like, that the non-flame-retardant resin has intrinsically.

Layering a flame-retardant adhesive composition layer comprising the present flame-retardant adhesive composition on a non-flame-retardant resin layer can be achieved by co-extruding the present flame-retardant adhesive composition with another thermosetting resin or thermoplastic resin, or, by layering a film comprising the present flame-retardant adhesive composition by extrusion lamination, heat lamination, dry lamination or the like.
However, it is necessary that the heating temperature during forming is a lower temperature than at least the decomposition temperature of the foaming agent (C), further, a lower temperature than the melting temperature of the phosphorus series compound (B) is desirable, and in particular 130°C or lower is more desirable.
After forming in this manner, curing (aging) may be performed by heating at 30 to 100°C for 1 to 24 hours, or the like, as necessary.

Since the laminate provided with a flame-retardant adhesive composition layer comprising the present flame-retardant adhesive composition, that is to say, the present laminated film, has excellent flame-retardancy, peel strength, and mechanical strength, it can be used widely in application such as, for instance, electrical insulation material, membrane switch circuit print substrate, copier internal member, sheet heating element substrate and FPC reinforcement plate.
In addition, the present laminated film can be placed in electronic devices such as, for instance, liquid crystal displays, car navigation, mobile phones, game machines, audio players, digital cameras, televisions, electronic dictionaries, hard-disk recorders and video cameras. For instance, when placing on the battery of an electronic device, the placement can be by covering the battery main body. In addition, for instance when placing in a personal computer, the placement can be in a location where insulation is sought by wedging or by fixing with an adhesive tape or the like.

### (Explanation of terms)

In the present invention, "flame-retardant" in "flame-retardant adhesive composition" refers to properties that, based on the UL94 VTM criteria of UL94 vertical burning test, satisfy at least the VTM-2 standard, preferably those that satisfy the VTM-1 standard, and among them, preferably those that satisfy the VTM-0 standard.
The form of the "flame-retardant adhesive composition" is optional and may be in, for instance, layer form, membrane form, film form, sheet form, panel form, and any other forms.
A "non-flame-retardant resin layer" is one that, based on the UL94 VTM criteria of the UL94 vertical burning test, does not satisfy the VTM-2 standard.

In the present invention, when the expression "major component" is used, unless expressly noted, it includes the meaning of allowing another component to be contained in a range that does not hinder the function of the major component. Although not to specify the content ratio of the major component in particular, this includes cases where 50% in mass or greater, in particular 70% in mass or greater, of which 90% in mass or greater (including 100%) in the composition is occupied by this component (if two components or more are the major components, the total amount thereof).
In addition, herein, when the notation "X to Y" (X and Y are arbitrary numbers) is used, unless expressly indicated, the meaning is "X or greater and Y or lower", and includes the meaning "preferably greater than X" or "preferably less than Y".
In addition, when the notation "X or greater" (X is an arbitrary number) or "Y or less" (Y is an arbitrary number) is used, this includes also the intent to the effect of "greater than X is desirable" or "less than Y is desirable".

In addition, generally, "sheet", as defined in JIS, refers to a product that is thin and flat with the thickness thereof being small given the length and the width, and generally, "film" refers to a thin and flat product with an arbitrarily limited maximum thickness, the thickness being extremely small compared to the length and width, in general provided in the form or a roll (Japanese Industrial Standards JIS K6900). However, as the boundary between a sheet and a film is not determined and there is no need in the present invention to distinguish the two by words, in the present invention, "sheet" is deemed included even when referring to "film", and "film" is deemed included even when referring to "sheet".

### [Examples]

Examples will be given in the following; however, the scope of the present invention is not to be limited by the examples..
First, the methods for evaluating the examples will be described.

### <Flame-retardancy test>

Using 200 mm length x 50 mm width evaluation samples (different thicknesses depending on each test piece) and based on the procedure of the standard for safety UL94 Thin Material Vertical Burn Test from Underwriters Laboratories, burn test was performed for a number of tests of five times, and how the burning proceeded was observed (in particular, presence or absence of drips during burning) while the burning duration was measured (total burning duration for the number of tests of five times). Note that, regarding the samples that, during a test, burned up to the mark defined in the UL94 Vertical Burn Test, the burning duration was reported in the tables as "equal to or longer than the time totaling the durations of burning up to the mark".
Based on the UL94 VTM criteria of the UL94 Vertical Burn Test, whether or not the VTM-0, 1 or 2 standard is satisfied was taken as assessed, and those samples that did not satisfy VTM-2 were evaluated as off-standard, and those that satisfied VTM-0 were evaluated as accepted products.

### <Peel strength test>

The peel strength of the adhesive films (sample adhesive films) obtained in the examples and comparative examples was tested as follows.
For the laminated films comprising adhesive films obtained in the examples and comparative examples, which were sandwiched and layered with two polyethylene terephthalate films, the peel strength when peeling a polyethylene terephthalate film on one side was measured, as shown in Fig. 1, to measure the peel strength of the adhesive film (sample adhesive film). However, with Example 1-14, instead of a polyethylene terephthalate film, a polycarbonate film was layered and peeled.
In so doing, measurements of the peel strength were carried out using, a tensile tester (Material Tester 201X with thermoregulated bath, manufactured by Intesco Co., Ltd.). Using 10 mm-wide evaluation samples, 180° peel test were performed at 23°C atmosphere temperature, 50% humidity and 10 mm/minute peel speed. Then, those for which the peel strength was 150g/10 mm or greater were evaluated as accepted products.

### <Foamed/unfoamed determination of foaming agent>

Thin sections with a thickness of 700Å were collected from the adhesive films (sample adhesive films) obtained in the examples/comparative examples, observed at 2,000 X with a scanning electron microscope, how many voids of 1 µm or smaller were present within a size of 30 µm x 30 µm in actual dimensions was measured, and the determination was "unfoamed state" when the number of voids was 5 or less, and "foamed state" when the number of voids was greater than 5.

### <Evaluation of fluidity >

For the adhesive resin compositions obtained in Examples 2-1 to 2-9 and Comparative Examples 2-1 to 2-4, viscosity measurements were carried out using MR-300T (cone plate rheometer) manufactured by Rheology Co., Ltd., at 9 mm cone radius, 6.28 rad/s cone angle, 120°C measurement temperature, 1 Hz measurement frequency and 5 minutes measurement time; the results are shown in Table 3 and Table 4.
Those for which viscosity was 10,000 to 50,000 mPa·s were evaluated as accepted products.

### <Examples 1-1 to 1-15 and Comparative Examples 1-1 to 1-5>

In the following, the raw materials that were used in Examples 1-1 to 1-15 and Comparative Examples 1-1 to 1-5, that is to say, the thermoset-type adhesive resin compositions (A), the phosphorus series compounds (B) and the foaming agents (C) will be described.

Thermoset-type adhesive resin composition (A)-1: epoxy series adhesive resin in liquid form comprising EPU-11 (urethane-modified epoxy resin) manufactured by ADEKA Corporation and Versamid 115 (polyamide amine, amine number: 240) manufactured by Cognis Japan Ltd. mixed with a mixing mass ratio of 20:80.
Thermoset-type adhesive resin composition (A)-2: epoxy series adhesive resin in liquid form comprising EPU-11 (urethane-modified epoxy resin) manufactured by ADEKA Corporation and Versamid 115 (polyamide amine, amine number: 240) manufactured by Cognis Japan Ltd. mixed with a mixing mass ratio of 40:60.

Phosphorus series compound (B)-1: EXOLIT OP930 (aluminum diethylphosphinate, 5 µm average particle size, 13m²/g specific surface area, solid state at 250°C) manufactured by Clariant.
Phosphorus series compound (B)-2: EXOLIT OP1230 (aluminum diethylphosphinate, 5 to 40 µm average particle size, solid state at 250°C) manufactured by Clariant.
Phosphorus series compound (B)-3: SP-703H (condensed phosphoric ester amide, average particle size: 1.6 µm; melting temperature: 180°C) manufactured by Shikoku Chemicals Corporation.
Phosphorus series compound (B)-4: ZURAN 484 (ammonium polyphosphate, average particle size: 8 µm; melting temperature: 280°C) manufactured by CHITEC Corporation.

Note that the above melting temperatures of the phosphorus series compounds (B) are values that were measured in the following manner.
The above melting temperatures were measured with a differential scanning calorimeter (DSC-7, manufactured by Perkin-Elmer) based on JIS-K7121 by collecting on the order of 10 mg of phosphorus series compound to serve as a test sample and rising a temperature of the test sample from -40°C to 250°C at a speed of 10°C/minute. In so doing, a series of measurements were carried out under nitrogen atmosphere.
The melting temperatures were read from the obtained thermograms. In addition, those samples for which no melting peak was obtained were evaluated as "solid state at 250°C".

Foaming agent (C)-1: CELLMIC C-2 (endothermic foaming agent, azodicarbonamide series foaming agent, decomposition temperature: 204°C) manufactured by Sankyo Kasei Co., Ltd.
Foaming agent (C)-2: CELLMIC 417 (endothermic foaming agent, inorganic series foaming agent, decomposition temperature: 208°C) manufactured by Sankyo Kasei Co., Ltd.
Foaming agent (C)-3: CELLTETRA P5T (endothermic foaming agent, 5-phenyl tetrazole, decomposition temperature: 260°C) manufactured by Eiwa Chemical Ind. Co., Ltd.

### (Example 1-1)

An adhesive resin composition was obtained by melt-mixing the thermoset-type adhesive resin composition (A)-1, the phosphorus series compound (B)-1 and the foaming agent (C)-1 at a proportion of 55/40/5 mixing mass ratio under heating at 120°C. Next, the obtained adhesive resin composition was heat-pressed at 120°C to obtain several sheets of adhesive film with a thickness of 30 µm.

Among those obtained, a portion of the adhesive films (30 µm thickness) was sandwiched from both sides with two sheets of 38 µm-thick polyethylene terephthalate film and then heat-pressed at 120°C to obtain a laminated film for which the layers totaled 100 µm.

Note that a biaxially stretched film was used for the polyethylene terephthalate film, which was prepared as follows:
NOVAPEX (IV: 0.65) manufactured by Mitsubishi Chemical Corporation was used as the polyethylene terephthalate resin, after NOVAPEX was kneaded at 260°C in a 40 mmØ uniaxial extruder, it was extruded from the port and then cooled rapidly on a casting roll at approximately 40°C to prepare a 342 µm-thick amorphous sheet. Next, this was fed to a sequential biaxial tenter manufactured by Mitsubishi Heavy Industries, Ltd., drawing was carried out with a draw ratio of 3-fold at 95°C along MD (longitudinal direction), next, drawing was carried out with a draw ratio of 3-fold at 110°C along TD (transversal direction), and thereafter, a further heat treatment was carried out at 160°C for 15 seconds to obtain a 38 µm-thick biaxially stretched film.

The adhesive films and laminated films obtained as described above were respectively left alone inside a baking tester (DKS-5S manufactured by Daiei Kagaku Seiki Mfg. Co., Ltd.) to carry out heat treatment at 80°C for 24 hours.
For the adhesive films obtained in this way, a flame-retardancy test was carried out while a foamed/unfoamed determination of the foaming agent was carried out, on the other hand, regarding the obtained laminated films, an evaluation of flame-retardancy was carried out along with an evaluation of peel strength, and the results are shown in Table 1.

### (Example 1-2)

Preparation and evaluation of the sample were carried out by similar methods to Example 1-1, except that the adhesive resin composition was prepared by melt-mixing the thermoset-type adhesive resin composition (A)-1, the phosphorus series compound (B)-2 and the foaming agent (C)-1 at a proportion of 55/40/5 mass ratio; the results are shown in Table 1.

### (Example 1-3)

Preparation and evaluation of the sample were carried out by similar methods to Example 1-1, except that the adhesive resin composition was prepared by melt-mixing the thermoset-type adhesive resin composition (A)-1, the phosphorus series compound (B)-1 and the foaming agent (C)-2 at a proportion of 55/40/5 mass ratio; the results are shown in Table 1.

### (Example 1-4)

Preparation and evaluation of the sample were carried out by similar methods to Example 1-1, except that the adhesive resin composition was prepared by melt-mixing the thermoset-type adhesive resin composition (A)-1, the phosphorus series compound (B)-1 and the foaming agent (C)-1 at a proportion of 70/25/5 mass ratio; the results are shown in Table 1.

### (Example 1-5)

Preparation and evaluation of the sample were carried out by similar methods to Example 1-1, except that the adhesive resin composition was prepared by melt-mixing the thermoset-type adhesive resin composition (A)-1, the phosphorus series compound (B)-1 and the foaming agent (C)-1 at a proportion of 45/50/5 mass ratio; the results are shown in Table 1.

### (Example 1-6)

Preparation and evaluation of the sample were carried out by similar methods to Example 1-1, except that the adhesive resin composition was prepared by melt-mixing the thermoset-type adhesive resin composition (A)-1, the phosphorus series compound (B)-1 and the foaming agent (C)-1 at a proportion of 57/40/3 mass ratio; the results are shown in Table 1.

### (Example 1-7)

Preparation and evaluation of the sample were carried out by similar methods to Example 1-1, except that the adhesive resin composition was prepared by melt-mixing the thermoset-type adhesive resin composition (A)-2, the phosphorus series compound (B)-1 and the foaming agent (C)-1 at a proportion of 55/40/5 mass ratio; the results are shown in Table 1.

### (Example 1-8)

Preparation and evaluation of the sample were carried out by similar methods to Example 1-1, except that the adhesive resin composition was prepared by melt-mixing the thermoset-type adhesive resin composition (A)-1, the phosphorus series compound (B)-1 and the foaming agent (C)-3 at a proportion of 55/40/5 mass ratio; the results are shown in Table 1.

### (Example 1-9)

Preparation and evaluation of the sample were carried out by similar methods to Example 1-1, except that the adhesive resin composition was prepared by melt-mixing the thermoset-type adhesive resin composition (A)-1, the phosphorus series compound (B)-1 and the foaming agent (C)-1 at a proportion of 80/15/5 mass ratio; the results are shown in Table 1.

### (Example 1-10)

Preparation and evaluation of the sample were carried out by similar methods to Example 1-1, except that the adhesive resin composition was prepared by melt-mixing the thermoset-type adhesive resin composition (A)-1, the phosphorus series compound (B)-1 and the foaming agent (C)-1 at a proportion of 59.8/40/0.2 mass ratio; the results are shown in Table 1.

### (Example 1-11)

Preparation and evaluation of the sample were carried out by similar methods to Example 1-1, except that the adhesive resin composition was prepared by melt-mixing the thermoset-type adhesive resin composition (A)-1, the phosphorus series compound (B)-1 and the foaming agent (C)-1 at a proportion of 51/40/9 mass ratio; the results are shown in Table 1.

### (Example 1-12)

Preparation and evaluation of the sample were carried out by similar methods to Example 1-1, except that the adhesive resin composition was prepared by melt-mixing the thermoset-type adhesive resin composition (A)-1, the phosphorus series compound (B)-3 and the foaming agent (C)-1 at a proportion of 47/50/3 mass ratio; the results are shown in Table 1.

### (Example 1-13)

Preparation and evaluation of the sample were carried out by similar methods to Example 1-1, except that the adhesive resin composition was prepared by melt-mixing the thermoset-type adhesive resin composition (A)-1, the phosphorus series compound (B)-4 and the foaming agent (C)-1 at a proportion of 47/50/3 mass ratio; the results are shown in Table 1.

### (Example 1-14)

Preparation and evaluation of the sample were carried out by similar methods to Example 1-1, except that a polycarbonate film was used instead of the polyethylene terephthalate film; the results are shown in Table 1.

Note that a non-stretched film was used for the polycarbonate film, which was prepared as follows:
lupilon H-3000 manufactured by Mitsubishi Engineering-Plastics Corporation was used as the polycarbonate resin, after lupilon H-3000 was kneaded at 260°C in a 40 mmØ uniaxial extruder, it was extruded from the port and then cooled rapidly on a casting roll at approximately 120°C to obtain a 38 µm-thick non-stretched film.

### (Example 1-15)

Changing one sheet among the set of polyethylene terephthalate films in Example 1-1 to MRF38 (polyethylene terephthalate film treated with a silicone release on one of the sides; thickness: 38 µm) manufactured by Mitsubishi Kagaku Polyester Film, an adhesive film (thickness: 30 µm) was sandwiched from both sides with two sheets of 38 µm-thick polyethylene terephthalate film (one sheet was MRF38) and then heat-pressed at 120°C to obtain a laminated film for which the layers totaled 100 µm.
MRF38 was peeled from the obtained laminated film, resulting in a laminated film for which the layers totaled 62 µm, similar evaluations to Example 1-1 were performed thereon, the results of which are shown in Table 1.

### (Comparative Example 1-1)

Preparation and evaluation of the sample were carried out by similar methods to Example 1-1, except that the adhesive resin composition was prepared by melt-mixing the thermoset-type adhesive resin composition (A)-1 and the phosphorus series compound (B)-1 at a proportion of 60/40 mass ratio; the results are shown in Table 2.

### (Comparative Example 1-2)

Preparation and evaluation of the sample were carried out by similar methods to Example 1-1, except that the adhesive resin composition was prepared by melt-mixing the thermoset-type adhesive resin composition (A)-1 and the phosphorus series compound (B)-2 at a proportion of 60/40 mass ratio; the results are shown in Table 2.

### (Comparative Example 1-3)

Preparation and evaluation of the sample were carried out by similar methods to Example 1-1, except that the adhesive resin composition was prepared by melt-mixing the thermoset-type adhesive resin composition (A)-1 and the foaming agent (C)-1 at a proportion of 95/5 mass ratio; the results are shown in Table 2.

### (Comparative Example 1-4)

Preparation and evaluation of the sample were carried out by similar methods to Example 1-1, except that the adhesive resin composition was prepared by using HIGILITE H-34 (aluminum hydroxide) manufactured by Showa Denko KK, which is used as a flame-retardation helper, instead of the foaming agent and melt-mixing the thermoset-type adhesive resin composition (A)-1 and HIGILITE H-34 at a proportion of 45/25/30 mass ratio; the results are shown in Table 2.

### (Comparative Example 1-5)

Preparation and evaluation of the sample were carried out by similar methods to Example 1-1, except that the adhesive resin composition was prepared by using Daihachi Chemical Industry Co., Ltd. PX-200 (condensed phosphoric ester, melting temperature: 92°C) instead of the phosphorus series compound (B)-1 and melt-mixing the thermoset-type adhesive resin composition (A)-1, PX-200 and the foaming agent (C)-1 at a proportion of 55/40/5 mass ratio; the results are shown in Table 2.

**[Table 1]**

| | | Example | Example | Example | Example | Example | Example | Example | Example | Example | Example | Example | Example | Example | Example | Example |
|---|---|---|---|---|---|---|---|---|---|---|---|---|---|---|---|---|
| | | 1-1 | 1-2 | 1-3 | 1-4 | 1-5 | 1-6 | 1-7 | 1-8 | 1-9 | 1-10 | 1-11 | 1-12 | 1-13 | 1-14 | 1-15 |
| (A)-1 | | 55 | 55 | 55 | 70 | 45 | 57 | | 55 | 80 | 59.8 | 51 | 47 | 47 | 55 | 55 |
| (A)-2 | | | | | | | | 55 | | | | | | | | |
| (B)-1 | | 40 | | 40 | 25 | 50 | 40 | 40 | 40 | 15 | 40 | 40 | | | 40 | 40 |
| (B)-2 | | | 40 | | | | | | | | | | | | | |
| (B)-3 | | | | | | | | | | | | | 50 | | | |
| (B)-4 | | | | | | | | | | | | | | 50 | | |
| PX-200 | | | | | | | | | | | | | | | | |
| (C)-1 | | 5 | 5 | | 5 | 5 | 3 | 5 | | 5 | 0.2 | 9 | 3 | 3 | 5 | 5 |
| (C)-2 | | | | 5 | | | | | | | | | | | | |
| (C)-3 | | | | | | | | | 5 | | | | | | | |
| HIGILITE H-34 | | | | | | | | | | | | | | | | |
| Flame-retardancy | | | | | | | | | | | | | | | | |
| Adhesive film | UL94VTM | VTM-0 | VTM-0 | VTM-0 | VTM-0 | VTM-0 | VTM-0 | VTM-0 | VTM-0 | VTM-0 | VTM-0 | VTM-0 | VTM-0 | VTM-0 | VTM-0 | VIM-0 |
| | Total combustion duration (seconds) | 0 | 0 | 0 | 8 | 0 | 0 | 0 | 2 | 34 | 16 | 6 | 2 | 5 | 0 | 0 |
| | Presence/absence of drips | Absent | Absent | Absent | Absent | Absent | Absent | Absent | Absent | Absent | Absent | Absent | Absent | Absent | Absent | Absent |
| Laminated film | UL94VTM | VTM-0 | VTM-0 | VTM-0 | VTM-0 | VTM-0 | VTM-0 | VTM-0 | VTM-0 | VTM-0 | VTM-0 | VTM-0 | VTM-0 | VTM-0 | VTM-0 | VTM-0 |
| | Total combustion duration (seconds) | 24 | 37 | 22 | 38 | 12 | 19 | 26 | 32 | 44 | 34 | 43 | 16 | 20 | 18 | 12 |
| | Presence/absence of drips | Absent | Absent | Absent | Absent | Absent | Absent | Absent | Absent | Absent | Absent | Absent | Absent | Absent | Absent | Absent |
| Peel strength (g/10mm) | | 212 | 208 | 228 | 278 | 186 | 210 | 178 | 195 | 265 | 222 | 233 | 182 | 168 | 254 | 210 |

**[Table 2]**

| | | Comparative Example | Comparative Example | Comparative Example | Comparative Example | Comparative Example |
|---|---|---|---|---|---|---|
| | | 1-1 | 1-2 | 1-3 | 1-4 | 1-5 |
| (A)-1 | | 60 | 60 | 95 | 45 | 55 |
| (A)-2 | | | | | | |
| (B)-1 | | 40 | | | 25 | |
| (B)-2 | | | 40 | | | |
| (B)-3 | | | | | | |
| (B)-4 | | | | | | |
| PX-200 | | | | | | 40 |
| (C)-1 | | | | 5 | | 5 |
| (C)-2 | | | | | | |
| (C)-3 | | | | | | |
| | | | | | 30 | |
| Flame-retardancy | | | | | | |
| Adhesive film | UL94VTM | VTM-2 | Off-standard | Off-standard | VTM-2 | VTM-2 |
| | Total burning duration (seconds) | 18 | 38 or longer | 25 or longer | 64 | 48 |
| | Presence/absence of drips | Present | Present | Present | Present | Present |
| Laminated film | UL94VTM | VTM-2 | Off-standard | Off-standard | Off-standard | Off-standard |
| | Total burning duration (seconds) | 23 | 50 or longer | 24 or longer | 21 or longer | 58 or longer |
| | Presence/absence of drips | Present | Present | Present | Present | Present |
| | | 220 | 218 | 312 | 123 | 186 |

### (Discussion)

When the foamed/unfoamed determination of the foaming agent was performed for the adhesive films obtained in the examples and comparative examples that used a foaming agent (Examples 1-1 to 1-13, Comparative Examples 1-3 and 1-5), the foaming agent in the film was verified to be in an "unfoamed state" for all the adhesive films.

When the examples and the comparative examples were compared, Examples 1-1 to 1-13, which contain a thermoset-type adhesive resin composition (A), a phosphorus series compound (B) and a foaming agent (C), were all found to have excellent flame-retardancy, and all could be evaluated as accepted products, compared to the comparative examples, which lacked either of a phosphorus series compound (B) and a foaming agent (C). Note that all the adhesive films of Examples 1-1 to 1-13 were films that were exceptionally thinner than 1 mm, the thickness thereof being 30 µm.

From comparing the examples and the comparative examples (in particular Comparative Example 1-5) along with the implementation experiences so far, it was found that using a compound with a melting temperature of 170°C or higher as the phosphorus series compound (B) was necessary, and in particular, using a phosphorus series compound with a melting temperature of 190°C or higher was desirable.
In addition, from Examples 1-1 to 1-13 as well as the experience of implementations outside of these examples, it was found that a phosphinic acid salt such as aluminum diethylphosphinate was desirable as the phosphorus series compound (B), from the point of view of allowing flame-retardancy to be obtained even at a low concentration compared to other phosphorus series compounds.
Further in addition, from Examples 1-1 to 1-13 as well as the experience of implementations outside of these examples, it was found, regarding the mixing amount of the phosphorus series compound (B), that a content in the present flame-retardant adhesive composition of 10 to 70% in mass was desirable, in particular 30 to 60% in mass was more desirable, of which 40 to 55% in mass was even more desirable, from the point of view of conferring flame-retardancy, mechanical properties, for instance, film strength, furthermore, increase in viscosity during forming, and the like.
Note that, from the point of view of flame-retardancy and formability, it is thought that an adequate specific surface area for the phosphorus series compound (B) is within a range of 1 m²/g to 50 m²/g and preferably within a range of 5 m²/g to 20 m²/g.

Regarding foaming agents (C), from Examples 1-1 to 1-13 as well as the experience of implementations outside of these examples, it was found that using endothermic foaming agents was desirable, and among them, using foaming agents with decomposition temperature of 190°C or higher, in particular 195 to 300°C, of which in particular 200 to 250°C, was desirable.
Similarly, from Examples 1-1 to 1-13 as well as the experience of implementations outside of these examples, the mixing amount of foaming agent (C) was found to be more desirable when mixing with a proportion of 0.1 to 10% in mass, in particular 1 to 8% in mass, of which in particular a proportion of 3 to 5 mass, from the point of view of flame-retardancy, adhesive property, mechanical properties (such as film strength) and the like.

Regarding the thickness of the flame-retardant resin laminated film, from Examples 1-1 to 1-13 as well as the experience of implementations outside of these examples, it was found that flame-retardancy could be obtained even if the total thickness of the flame-retardant resin laminated film is 500 µm or less, if the proportion occupied in the total thickness by the thickness of the adhesive film is 20 to 70%.
In addition, from the results of Examples 1-14 and 1-15, it was verified that even if the film layered on the flame-retardant adhesive composition layer comprising the present flame-retardant adhesive composition is a resin film that is other than PET, similar effects could be obtained.

### <Examples 2-1 to 2-9 and Comparative Examples 2-1 to 2-4>

In the following, the raw materials that were used in Examples 2-1 to 2-9 and Comparative Examples 2-1 to 2-4, that is to say, the epoxy resins (a), the polyamide amines (b), the phosphorus series compounds (B) and the foaming agents (C) will be described.

Epoxy resin (a)-1: EPU-11 (urethane-modified epoxy resin in liquid form) manufactured by ADEKA Corporation.

Polyamide amine (b)-1: Versamid 100 (polyamide amine in liquid form, amine number: 90) manufactured by Cognis Japan Ltd.
Polyamide amine (b)-2: Versamid 115 (polyamide amine in liquid form, amine number: 240) manufactured by Cognis Japan Ltd.
Polyamide amine (b)-3: Versamid 125 (polyamide amine in liquid form, amine number: 350) manufactured by Cognis Japan Ltd.
Note that, when a mixture of two species of polyamide amine was used as the polyamide amine (b), the "amine number of (b)" indicated in the tables is the amine number as a mixture, that is to say, the total value of "amine number x mixing ratio" for each polyamide amine (for instance, in Example 2-1, 90×10/38+240×28138).

Phosphorus series compound (B)-1: EXOLIT OP930 (aluminum diethylphosphinate, average particle size: 5 µm, solid state at 250°C) manufactured by Clariant.
Phosphorus series compound (B)-2: SP-703H (condensed phosphoric ester amide, average particle size: 1.6 µm; melting temperature: 180°C) manufactured by Shikoku Chemicals Corporation.

Foaming agent (C)-1: CELLMIC 417 (endothermic foaming agent, inorganic series foaming agent, decomposition temperature: 208°C) manufactured by Sankyo Kasei Co., Ltd.
Foaming agent (C)-2: CELLMIC C-2 (endothermic foaming agent, azodicarbonamide, decomposition temperature: 204°C) manufactured by Sankyo Kasei Co., Ltd.

### (Example 2-1)

An adhesive resin composition was obtained by melt-mixing the epoxy resin (a)-1, the polyamide amine (b)-1, the polyamide amine (b)-2, the phosphorus series compound (B)-1 and the foaming agent (C)-1 at a proportion of 15/10/28/45/2 mixing mass ratio under heating at 120°C.
Next, the obtained adhesive resin composition was heat-pressed at 120°C to obtain 30 µm-thick adhesive films.

Among those obtained, a portion of the adhesive films (30 µm thickness) was sandwiched from both sides with two sheets of 38 µm-thick polyethylene terephthalate film and then heat-pressed at 120°C to obtain a laminated film for which the layers totaled 100 µm.

Note that a biaxially stretched film was used for the polyethylene terephthalate film, which was prepared as follows:
NOVAPEX (IV: 0.65) manufactured by Mitsubishi Chemical Corporation was used as the polyethylene terephthalate resin, after this NOVAPEX was kneaded at 260°C in a 40 mmØ uniaxial extruder, it was extruded from the port and then cooled rapidly on a casting roll at approximately 40°C to prepare a 342 µm-thick amorphous sheet. Next, this was fed to a sequential biaxial tenter manufactured by Mitsubishi Heavy Industries, Ltd., drawing was carried out with a draw ratio of 3-fold at 95°C along MD (longitudinal direction), next, drawing was carried out with a draw ratio of 3-fold at 110°C along TD (transversal direction), and thereafter, a further heat treatment was carried out at 160°C for 15 seconds to obtain a 38 µm-thick biaxially stretched film.
The adhesive films and laminated films obtained as described above were respectively left alone inside a baking tester (DKS-5S manufactured by Daiei Kagaku Seiki Mfg. Co., Ltd.) to carry out heat treatment at 80°C for 24 hours.

Regarding the adhesive resin composition obtained in the above preparation process, an evaluation of fluidity was carried out; regarding the adhesive film, a foamed/unfoamed determination of the foaming agent was carried out while a flame-retardancy test was carried out; and regarding the obtained laminated films, an evaluation of flame-retardancy was carried out along with an evaluation of peel strength; the results are shown in Table 3.

### (Example 2-2)

Preparation and evaluation of the sample were carried out by similar methods to Example 2-1, except that the adhesive resin composition was prepared by melt-mixing the epoxy resin (a)-1, the polyamide amine (b)-1, the polyamide amine (b)-2, the phosphorus series compound (B)-1 and the foaming agent (C)-1 at a proportion of 10/10/18/60/2 mass ratio. The results are shown in Table 3.

### (Example 2-3)

Preparation and evaluation of the sample were carried out by similar methods to Example 2-1, except that the adhesive resin composition was prepared by melt-mixing the epoxy resin (a)-1, the polyamide amine (b)-1, the polyamide amine (b)-2, the phosphorus series compound (B)-1 and the foaming agent (C)-1 at a proportion of 15/10/26/4514 mass ratio. The results are shown in Table 3.

### (Example 2-4)

Preparation and evaluation of the sample were carried out by similar methods to Example 2-1, except that the adhesive resin composition was prepared by melt-mixing the epoxy resin (a)-1, the polyamide amine (b)-1, the polyamide amine (b)-3, the phosphorus series compound (B)-1 and the foaming agent (C)-1 at a proportion of 15/23/15/45/2 mass ratio. The results are shown in Table 3.

### (Example 2-5)

Preparation and evaluation of the sample were carried out by similar methods to Example 2-1, except that the adhesive resin composition was prepared by melt-mixing the epoxy resin (a)-1, the polyamide amine (b)-1, the polyamide amine (b)-2, the phosphorus series compound (B)-1 and the foaming agent (C)-1 at a proportion of 10/5/38/45/2 mass ratio. The results are shown in Table 3.

### (Example 2-6)

Preparation and evaluation of the sample were carried out by similar methods to Example 2-1, except that the adhesive resin composition was prepared by melt-mixing the epoxy resin (a)-1, the polyamide amine (b)-1, the polyamide amine (b)-2, the phosphorus series compound (B)-1 and the foaming agent (C)-1 at a proportion of 10/38/5/45/2 mass ratio. The results are shown in Table 3.

### (Example 2-7)

Preparation and evaluation of the sample were carried out by similar methods to Example 2-1, except that the adhesive resin composition was prepared by melt-mixing the epoxy resin (a)-1, the polyamide amine (b)-1, the polyamide amine (b)-2, the phosphorus series compound (B)-1 and the foaming agent (C)-1 at a proportion of 30/10/13/45/2 mass ratio. The results are shown in Table 3.

### (Example 2-8)

Preparation and evaluation of the sample were carried out by similar methods to Example 2-1, except that the adhesive resin composition was prepared by melt-mixing the epoxy resin (a)-1, the polyamide amine (b)-1, the polyamide amine (b)-2, the phosphorus series compound (B)-2 and the foaming agent (C)-1 at a proportion of 10/10/18/60/2 mass ratio. The results are shown in Table 3.

### (Example 2-9)

Preparation and evaluation of the sample were carried out by similar methods to Example 2-1, except that the adhesive resin composition was prepared by melt-mixing the epoxy resin (a)-1, the polyamide amine (b)-1, the polyamide amine (b)-2, the phosphorus series compound (B)-1 and the foaming agent (C)-2 at a proportion of 15/10/28/45/2 mass ratio. The results are shown in Table 3.

### (Comparative Example 2-1)

Preparation and evaluation of the sample were carried out by similar methods to Example 2-1, except that the adhesive resin composition was prepared by melt-mixing the epoxy resin (a)-1, the polyamide amine (b)-1, the phosphorus series compound (B)-1 and the foaming agent (C)-1 at a proportion of 15/38/45/2 mass ratio. The results are shown in Table 4.

### (Comparative Example 2-2)

Preparation and evaluation of the sample were carried out by similar methods to Example 2-1, except that the adhesive resin composition was prepared by melt-mixing the epoxy resin (a)-1, the polyamide amine (b)-2, the phosphorus series compound (B)-1 and the foaming agent (C)-1 at a proportion of 15/38/45/2 mass ratio. The results are shown in Table 4.

### (Comparative Example 2-3)

Preparation and evaluation of the sample were carried out by similar methods to Example 2-1, except that the adhesive resin composition was prepared by melt-mixing the epoxy resin (a)-1, the polyamide amine (b)-1, the polyamide amine (b)-2 and the phosphorus series compound (B)-1 at a proportion of 10/10/20/60 mass ratio. The results are shown in Table 4.

### (Comparative Example 2-4)

Preparation and evaluation of the sample were carried out by similar methods to Example 2-1, except that the adhesive resin composition was prepared by using Versamid 150 (polyamide amine, amine number385) manufactured by Cognis Japan Ltd. instead of the polyamide amine (b)-2 and melt-mixing the epoxy resin (a)-1, the polyamide amine (b)-1, Versamid 150, the phosphorus series compound (B)-1 and the foaming agent (C)-1 at a proportion of 15/10/28/45/2 mass ratio. The results are shown in Table 4.

**[Table 3]**

| | | Example | Example | Example | Example | Example | Example | Example | Example | Example |
|---|---|---|---|---|---|---|---|---|---|---|
| | | 2-1 | 2-2 | 2-3 | 2-4 | 2-5 | 2-6 | 2-7 | 2-8 | 2-9 |
| (a)-1 | | 15 | 10 | 15 | 15 | 10 | 10 | 30 | 10 | 15 |
| (b)-1 | | 10 | 10 | 10 | 23 | 5 | 38 | 10 | 10 | 10 |
| (b)-2 | | 28 | 18 | 26 | | 38 | 5 | 13 | 18 | 28 |
| (b)-3 | | | | | 15 | | | | | |
| Versamide 150 | | | | | | | | | | |
| (B)-1 | | 45 | 60 | 45 | 45 | 45 | 45 | 45 | | 45 |
| (B)-2 | | | | | | | | | 60 | |
| PX-200 | | | | | | | | | | |
| (C)-1 | | 2 | 2 | 4 | 2 | 2 | 2 | 2 | 2 | |
| (C)-2 | | | | | | | | | | 2 |
| Amine number of (b) | | 201 | 186 | 198 | 193 | 223 | 107 | 175 | 186 | 201 |
| Proportion occupied by (B) in the flame-retardant adhesive composition (% in mass) | | 45 | 60 | 45 | 45 | 45 | 45 | 45 | 60 | 45 |
| Proportion occupied by (C) in the flame-retardant adhesive composition (% in mass) | | 2 | 2 | 4 | 2 | 2 | 2 | 2 | 2 | 2 |
| Flame-retardancy | | | | | | | | | | |
| Adhesive film | UL94VTM | VTM-0 | VTM-0 | VTM-0 | VTM-0 | VTM-0 | VTM-0 | VTM-0 | VTM-0 | VTM-0 |
| | Total burning duration (seconds) | 0 | 0 | 0 | 0 | 0 | 0 | 0 | 0 | 0 |
| | Presence/absence of drips | Absent | Absent | Absent | Absent | Absent | Absent | Absent | Absent | Absent |
| Laminated film | UL94VTM | VTM-0 | VTM-0 | VTM-0 | VTM-0 | VTM-0 | VTM-0 | VTM-0 | VTM-0 | VTM-0 |
| | Total burning duration (seconds) | 22 | 12 | 23 | 22 | 24 | 24 | 21 | 25 | 23 |
| | Presence/absence of drips | Absent | Absent | Absent | Absent | Absent | Absent | Absent | Absent | Absent |
| Peel strength (g/10 mm) | | 265 | 178 | 254 | 235 | 267 | 232 | 197 | 172 | 266 |
| Viscosity (mPa·s) | | 18,000 | 22,000 | 19,000 | 18,000 | 16,000 | 35,000 | 17,000 | 21,000 | 18,000 |

**[Table 4]**

| | | Comparative Example | Comparative Example | Comparative Example | Comparative Example |
|---|---|---|---|---|---|
| | | 2-1 | 2-2 | 2-3 | 2-4 |
| (a)-1 | | 15 | 15 | 10 | 15 |
| (b)-1 | | 38 | | 10 | 10 |
| (b)-2 | | | 38 | 20 | |
| (b)-3 | | | | | |
| Versamide 150 | | | | | 28 |
| (B)-1 | | 45 | 45 | 60 | 45 |
| (B)-2 | | | | | |
| PX-200 | | | | | |
| (C)-1 | | 2 | 2 | | 2 |
| (C)-2 | | | | | |
| Amine number of (b) | | 90 | 240 | 190 | 307 |
| Proportion occupied by (B) in the flame-retardant adhesive composition (% in mass) | | 45 | 45 | 60 | 45 |
| Proportion occupied by (C) in the flame-retardant adhesive composition (% in mass) | | 2 | 2 | 0 | 2 |
| Flame-retardancy | | | | | |
| Adhesive film | UL94VTM | VTM-0 | VTM-0 | VTM-2 | VTM-0 |
| | Total burning duration (seconds) | 0 | 0 | 25 | 0 |
| | Presence/absence of drips | Absent | Absent | Present | Absent |
| Laminated film | UL94VTM | VTM-0 | VTM-0 | Off-standard | VTM-0 |
| | Total burning duration (seconds) | 21 | 18 | 14 | 17 |
| | Presence/absence of drips | Absent | Absent | Present | Absent |
| Peel strength (g/10 mm) | | 256 | 264 | 188 | 10 |
| Viscosity (mPa·s) | | 56,000 | 8,000 | 20,000 | 2,000 |

### (Discussion)

When the foamed/unfoamed determination of the foaming agent was performed for the adhesive films obtained in Examples 2-1 to 2-9, the foaming agent in the film was verified to be in an "unfoamed state" for all the adhesive films.

When the examples and the comparative examples were compared, Example 2-1 to 2-9, which contain a thermoset-type adhesive resin composition (A), a phosphorus series compound (B) and a foaming agent (C), were found to have excellent flame-retardancy, and all could be evaluated as accepted products, compared to the comparative examples, which lacked either of a phosphorus series compound (B) and a foaming agent (C). Note that all the adhesive films of Example 2-1 to 2-9 were films that were exceptionally thinner than 1 mm, the thickness thereof being 30 µm.

In addition, when Examples 2-1 to 2-9 and Comparative Examples 2-1 and 2-2 were compared, it was found that by using a polyamide amine (b) with an amine number of 100 to 225, not only the viscosity of the flame-retardant adhesive composition became suitable and fluidity was increased, thereby allowing a film to be prepared efficiently, but the conforming ability of the obtained film also increased, allowing layering to be performed without generating wrinkles.
From Examples 2-1 to 2-9 as well as the experience of implementations outside of these examples, it was found that the amine number of the polyamide amine (b) was preferably 130 to 180 and more preferably 150 to 200.

In addition, from Examples 2-1 to 2-9 as well as the experience of implementations outside of these examples, it was found that, for the proportion occupied by the polyamide amine (b) in the thermoset-type adhesive resin composition (A), 30 to 90% in mass was desirable, in particular 40 to 80% in mass, of which in particular 50 to 70% in mass was more desirable, from the point of view of obtaining adequate fluidity.
In addition, from Examples 2-1 to 2-9 as well as the experience of implementations outside of these examples, it was found that when using a mixture of polyamide amine (β-1) with an amine number of 50 to 95 and polyamide amine (β-2) with an amine number of 230 to 360, regarding the proportion of polyamide amine (β-1) and polyamide amine (β-2), 10 to 90% in mass was desirable, in particular 20 to 80% in mass, of which in particular 30 to 70% in mass was more desirable, as the proportion occupied by polyamide amine (β-1) in the entirety of polyamide amine (b).
Note that, from the point of view of flame-retardancy and formability, it is thought that an adequate specific surface area for the phosphorus series compound (B) is within a range of 1 m²/g to 50 m²/g and preferably within a range of 5 m²/g to 20 m²/g.

In addition, from Examples 2-1 to 2-9 as well as the experience of implementations outside of these examples, it was found that, from the point of view of allowing flame-retardancy to be obtained even at a low concentration, a phosphinic acid salt such as aluminum diethylphosphinate was desirable as the phosphorus series compound (B), compared to other phosphorus series compounds.
In addition, from Examples 2-1 to 2-9 as well as the experience of implementations outside of these examples, it was found, regarding the mixing amount of the phosphorus series compound (B), that a content in the present flame-retardant adhesive composition of 30 to 70% in mass was desirable, in particular 35 to 60% in mass was more desirable, of which 40 to 50% in mass was even more desirable, from the point of view of conferring flame-retardancy, mechanical properties, for instance, film strength, furthermore, increase in viscosity during forming, and the like

Regarding foaming agents (C), from Examples Example 2-1 to 2-9 as well as the experience of implementations outside of these examples, it was found that using endothermic foaming agents was desirable, and among them, using foaming agents with decomposition temperature of 190°C or higher, in particular 195 to 300°C, of which in particular 200 to 250°C, was desirable.
Similarly, from Examples 2-1 to 2-9 as well as the experience of implementations outside of these examples, the mixing amount of foaming agent (C) was found to be desirable when mixing with a proportion of 0.1 to 5% in mass in the present flame-retardant adhesive composition, and more desirable when mixing in particular with a proportion of 0.5 to 4% in mass, of which in particular a proportion of 1 to 3% in mass, from the point of view of flame-retardancy, adhesive property, mechanical properties (such as film strength) and the like.

Regarding the thickness of the flame-retardant resin laminated film, from Examples Example 2-1 to 2-9 as well as the experience of implementations outside of these examples, it was found that flame-retardancy could be obtained even if the total thickness of the flame-retardant resin laminated film is 500 µm or less, if the proportion occupied in the total thickness by the thickness of the adhesive film is 20 to 80%.

## Claims

1. A laminated film provided with a resin layer on at least one face of a flame-retardant adhesive composition layer comprising a flame-retardant adhesive composition containing a thermoset-type adhesive resin composition (A), a phosphorus series compound (B) with a melting temperature of 170°C or higher and a foaming agent (C) in an unfoamed state.

2. The laminated film according to claim 1, wherein said thermoset-type adhesive resin composition (A) is a resin composition having an epoxy resin and a hardener as major components.

3. The laminated film according to claim 1 or 2, wherein said foaming agent (C) is an endothermic foaming agent.

4. The laminated film according to any of claims 1 to 3, wherein said foaming agent (C) is a foaming agent with a decomposition temperature of 190°C or higher.

5. The laminated film according to any of claims 1 to 4, wherein said phosphorus series compound (B) is a phosphinic acid salt.

6. The laminated film according to any of claims 1 to 5, wherein said phosphorus series compound (B) is aluminum diethylphosphinate.

7. The laminated film according to any of claims 1 to 6, wherein said thermoset-type adhesive resin composition (A) is a resin composition having a urethane-modified epoxy resin and a polyamide amine as major components.

8. The laminated film according to any of claims 1 to 7, wherein said thermoset-type adhesive resin composition (A) is a resin composition having an epoxy resin and a polyamide amine for which the amine number is 100 to 225 as major components.

9. The laminated film according to claim 7 or 8, wherein the proportion occupied by said polyamide amine in said thermoset-type adhesive resin composition (A) is 30 to 90% in mass.

10. The laminated film according to any of claims 7 to 9, wherein said polyamide amine is a mixture of a polyamide amine (β-1) with an amine number of 50 to 95 and a polyamide amine (β-2) with an amine number of 230 to 360, the amine number of said mixture being 100 to 225.

11. A flame-retardant adhesive composition comprising a thermoset-type adhesive resin composition (A), a phosphorus series compound (B) with a melting temperature of 170°C or higher and an endothermic foaming agent (C) in an unfoamed state.

12. The flame-retardant adhesive composition according to claim 11, wherein said thermoset-type adhesive resin composition (A) is a resin composition having a urethane-modified epoxy resin and a polyamide amine as major components.

13. The flame-retardant adhesive composition according to claim 11 or 12, wherein said polyamide amine is a mixture of a polyamide amine(β-1) with an amine number of 50 to 95 and a polyamide amine (β-2) with an amine number of 230 to 360, the amine number of said mixture being 100 to 225.

14. An electronic device in which the laminated film according to any of claims 1 to 10 has been placed.
